# EUROPEAN PATENT APPLICATION

(11) **EP 1 726 833 A1**
(43) Date of publication of application: **29.11.2006**
(21) Application number: 06380124.5
(22) Date of filing: 23.05.2006
(51) Int. Cl.: F16B 2/26, F16B 15/00

(54) **Staple with a partially curved and partially straight cross-section**

(30) Priority: 24.05.2005 ES 200501254
(71) Applicant: Simes-Senco, S.A., 31486 Elcano-Navarra (ES)
(72) Inventor: Corchon Zamora, Carlos, 31620 Uharte - Navarra (ES)
(74) Representative: Urteaga Simarro, José Antonio

(57) **Abstract**

Ringed staple (1), or staple that when closed takes the approximate form of a ring, that presents a cross-section (3) with a substantially straight part (6) and a non-straight part (5), preferably curved circular. The non-straight part (5) corresponds with the exterior area (14) of the staple (1), whereas the substantially straight part (6) corresponds with the interior area (13) of the staple (1). The staple (1) requires less material and provides certain improved features over conventional staples (8,10) with a substantially circular cross-section (9) or a substantially rectangular cross section (11).

## Description

### Technical field

The invention refers to a staple of the type known as "ringed staples", i.e. staples that take the approximate form of a ring when they are closed.

### Prior art

The prior art contains multiple types of staples known as "ringed staples" that when closed take the approximate form of a ring (in contrast to, for example, office staples which are characterised in that when they are closed they have a flat shape). These ringed staples are usually used in numerous and very different applications such as the guiding of plants, the manufacture of mattresses, fences, cages, car seats, etc. Known ringed staples present all types of shapes and sizes, depending on the exact function they have to perform or other design requirements, and are made of diverse materials, generally metallic or plastic.

Metallic ringed staples are normally made from wire that is suitably curved until it takes the final form of the staple. Said wire usually has a cross-section, i.e. a section formed on a plane orthogonal to the longitudinal axis of the wire, either substantially rectangular (rectangular, rounded rectangular, or any shape with two parallel main sides) or substantially circular. Examples of metallic staples with a substantially circular cross-section can be found in utility models ES 1059043 U and ES 0292724 U and in Spanish industrial model 153491, all of them in name of the applicant.

In the manufacture of ringed staples of any material, shape and/or size, as in the manufacture of any object, it is an important requirement that an end product is obtained that simultaneously presents optimal functional features and as low a cost as possible. In this respect, the present invention aims to bring about an improvement in metallic ringed staples for the purpose of reducing their cost without impacting on their functionality.

### Brief description of the invention

It is an object of this invention to provide a metallic ringed staple that presents a cross-section that enables a reduction in the amount of material used in comparison with a staple of the same shape and identical size and with a substantially circular cross-section, while presenting at the same time substantially the same functional qualities. It is another object of this invention to provide a staple that presents better functionality than a staple of the same shape and size and with a substantially rectangular cross-section.

The inventive staple presents, as do conventional ringed staples, an exterior area and an interior area, the interior area being designed to surround and come into contact with the object it is designed to staple. Then, unlike conventional ringed staples, the inventive staple presents a cross-section with a partially straight and partially non-straight outline, i.e. with a substantially straight part and a non-straight part (preferably curved circular). The non-straight part corresponds with the exterior area of the staple, whereas the substantially straight part corresponds with the interior area of the staple. The passage from the substantially straight part to the non-straight part of the outline is performed by curved transition areas, said curved transition areas preferably being circular.

A staple of these characteristics presents various advantages in relation to conventional staples with a substantially circular cross-section and a substantially rectangular cross-section. With regard to staples with a substantially circular cross-section, the inventive staple presents a reduced cost as it is made with a smaller amount of material, as can be seen in detail in the figures accompanying this description. Said reduction of material does not cause a significant loss of strength in the staple, as said part of eliminated material contributes a low moment of inertia to the staple in the principal direction of force, as can be seen in the figures attached. In addition, the fact that the interior area of the staple is formed in a substantially straight shape helps fasten the staple more securely onto the elements to be connected, as said substantially straight shape provides a greater surface area of contact with said elements than a circular shape.

With respect to conventional staples with a substantially rectangular cross-section, among other advantages the inventive staple slides better in the claws of the manual or pneumatic tool that closes the staple, thereby reducing wear on the claws. This improvement is brought about by the fact that the inventive staple has a cross-section with an exterior outline formed mainly by a non-straight part and a substantially straight part instead of two substantially straight and parallel parts, as in the conventional staple with a substantially rectangular cross section. Furthermore, as regards a rectangular staple, the inventive staple improves the moment of inertia in the direction of force, in which the greatest strength is sought, as can be seen in the figures accompanying this description.

### Brief description of the figures

Details of the invention can be seen in the accompanying non-limiting drawings:
- Figure 1 shows a partial perspective of an embodiment of the cross-section of the inventive staple.
- Figure 2 shows a partial perspective of the staple of Figure 1 superimposed on a conventional staple with a substantially circular cross-section.
- Figure 3 shows a partial perspective of the staple of Figure 1 superimposed on a conventional staple with a substantially rectangular cross-section.
- Figures 4A, 4B and 4C show three embodiments of the inventive staple, provided with the cross-section of Figure 1.

### Detailed description of the invention

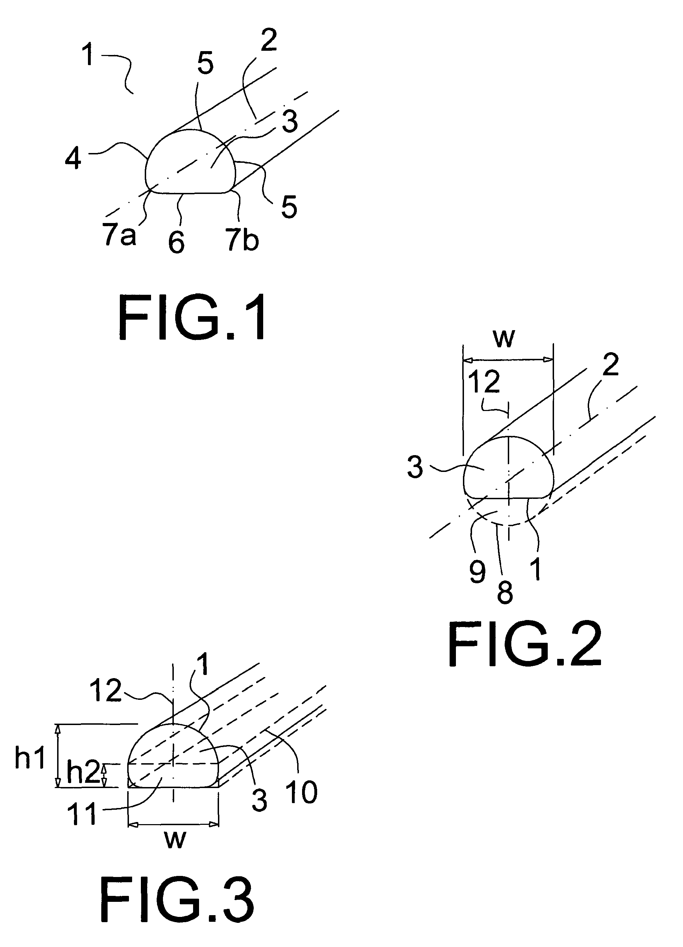

Figure 1 shows a partial perspective of an embodiment of the cross-section of the inventive staple. The staple (1) is made of a material disposed along a longitudinal axis (2), and in the figure can be seen a portion of the staple (1). A cut according to a plane transversal or perpendicular to the longitudinal axis (2) is made on said portion, leaving the cross-section (3) of the staple (1) visible. Said cross-section (3) has an outline (4) that comprises a non-straight part (5) and a substantially straight part (6), connected to each other by curved transition areas (7a, 7b). The non-straight part (5) is preferably curved and substantially circular, this preferred case being shown in the figure.

Figure 2 shows a partial perspective of the staple (1) of Figure 1 superimposed on a conventional staple (8) with a substantially circular cross-section (9) and with the same thickness as the inventive staple (1), i.e. where the staple (1) presents the same width (w) as the conventional staple (8). As can be seen in the figure, the cross-section (3) of the inventive staple (1) is smaller than the substantially circular cross-section (9) of the conventional staple (8). This difference in sizes between cross-sections (3, 9) results in the saving of material in the inventive staple (1) in relation to the conventional staple (8) with a substantially circular cross-section (9) of an equal width (w) or thickness. Said reduction in material results in a reduced cost, and does not lead to an appreciable loss of strength in the staple (1), as said part of eliminated material contributes a low moment of inertia to the staple (1) in the principal direction of force or direction of the axis (12).

Figure 3 shows a partial perspective of the staple (1) of Figure 1 superimposed on a conventional staple (10) with a substantially rectangular cross-section (11) and with approximately the same thickness as the inventive staple (1), i.e. where the staple (1) presents approximately the same width (w) as the conventional staple (10). As can be seen in the figure, the height (h1) of the inventive staple (1) is greater than the height (h2) of the conventional staple (10). With this increase in height in relation to the conventional staple (10), the inventive staple (1) brings about a greater moment of inertia in the axis (12) in which the staples (1, 10) have to exert their strength.

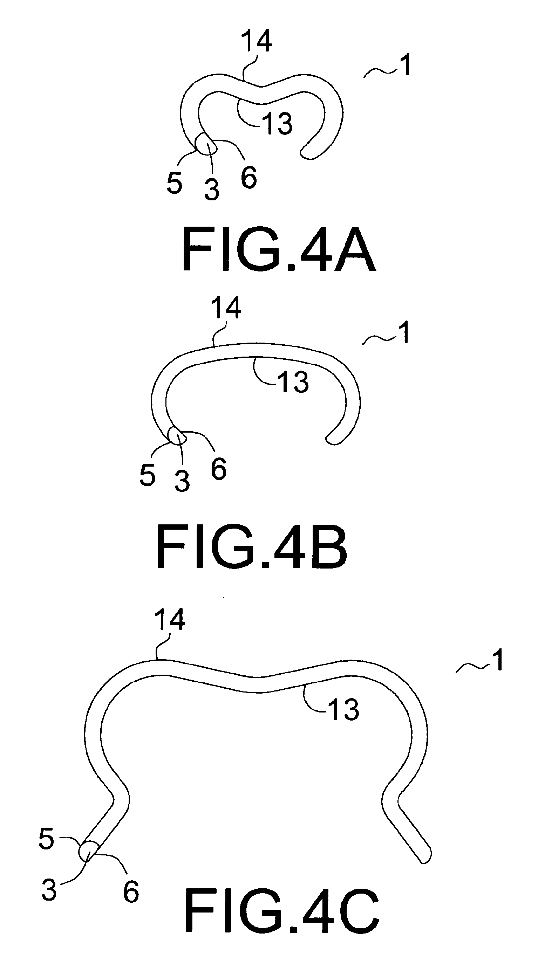

Figures 4A, 4B and 4C show three embodiments of the staple (1) provided with the cross-section of Figure 1. As has been stated, the cross-section concept defined by the invention is applicable to ringed staples of various sizes and shapes, obtained as a result of shaping in a different way the material disposed along the longitudinal axis (2). As can be seen in the figures, the non-straight part (5) of the cross-section (3) corresponds with the exterior area (14) of the staple (1), whereas the substantially straight part (6) corresponds with the interior area (13).

## Claims

1. Staple (1), made of a material disposed along a longitudinal axis (2) and shaped conveniently to take the exterior visible form of the staple (1), where the staple (1) comprises an interior area (13) and an exterior area (14), **characterised in that**:
- it presents a cross-section (3) the outline (4) of which comprises a non-straight part (5) and a substantially straight part (6), where the non-straight part (5) corresponds with the exterior area (14) of the staple (1) and the substantially straight part (6) corresponds with the interior area (13) of the staple (1).

2. Staple (1), in accordance with claim 1, **characterised in that** the non-straight part (5) is curved.

3. Staple (1), in accordance with claim 2, **characterised in that** the non-straight part (5) is substantially circular.

4. Staple (1), in accordance with claim 1, **characterised in that** the non-straight part (5) and the substantially straight part (6) are connected to each other by curved transition areas (7a, 7b).

5. Staple (1), in accordance with claim 4, **characterised in that** the transition areas (7a, 7b) are substantially circular.
